Europäisches Patentamt

European Patent Office

Office européen des brevets

(11) Veröffentlichungsnummer: **0 220 569**
**A2**

(12) **EUROPÄISCHE PATENTANMELDUNG**

(21) Anmeldenummer: **86114014.3**

(51) Int. Cl.⁴: **B01D 53/34**

(22) Anmeldetag: **09.10.86**

(30) Priorität: **29.10.85 DE 3538399**

(43) Veröffentlichungstag der Anmeldung:
**06.05.87 Patentblatt 87/19**

(84) Benannte Vertragsstaaten:
**AT BE DE GB NL SE**

(71) Anmelder: **STEAG AG**
**Bismarckstrasse 54 Postfach 10 37 62**
**D-4300 Essen 1(DE)**

(72) Erfinder: **Hannes, Klaus, Dr. Dipl.-Ing.**
**Lenbachstrasse 6a**
**D-5628 Heiligenhaus(DE)**

(54) **Verfahren zur Entfernung von Schadgasen aus Abgasen und Vorrichtung zur Durchführung des Verfahrens.**

(57) Bei einem Verfahren zur Entfernung von Schadgasen aus Abgasen, insbesondere Rauchgasen einer Feuerung, bei dem die Abgase ggf. unter Zugabe von Ammoniak quer durch eine innerhalb eines Reaktors von oben nach unten wandernden Schicht aus körnigem, kohlenstoffhaltigen Adsorptionsmittel geführt werden, ist erfindungsgemäß zur Druckkonstanthaltung vorgesehen, daß die Dicke der Wanderschicht in Querströmungsrichtung der Abgase gesehen von oben nach unten abnimmt derart, daß der Druckverlust über die Wanderschicht längs der Anströmstrecke im wesentlichen konstant ist.

EP 0 220 569 A2

## Verfahren zur Entfernung von Schadgasen aus Abgasen und Vorrichtung zur Durchführung des Verfahrens

Die Erfindung betrifft ein Verfahren zur Entfernung von Schadgasen aus Abgasen, insbesondere Rauchgasen einer Feuerung, bei dem die Abgase ggf. unter Zugabe von Ammoniak quer durch einer innerhalb eines Reaktors von oben nach unten wandernde Schicht aus körnigem, kohlenstoffhaltigen Adsorptionsmittel geführt werden.

Ein solches Verfahren ist aus der DE-PS 31 01 053 bekannt. Bei dem zur Durchführung des Verfahrens eingesetzten Wanderschichtreaktor begrenzen zwei Jalousien die Wanderschicht an ihrer Vorder-und Rückseite in bezug auf die Strömungsrichtung des Abgases. Diese Jalousien erstrecken sich parallel zueinander (vgl. auch die DE-OS 21 41 075).

In der von oben nach unten wandernden Schicht kommt es zur Verdichtung des körnigen Materials. Darüber hinaus erfolgt während der Wanderung ein Abrieb, wodurch das Porenvolumen der Wanderschicht begrenzt wird. Darüber hinaus kann es zur Bildung von Reaktionsprodukten mit den Schadgasen kommen, die ebenfalls das Porenvolumen der Schicht verändern. Bei der bekannten Verfahrensweise ist somit der Druckabfall in der Querströmung der Abgase über die Wanderschicht nicht konstant.

Es ist die Aufgabe der vorliegenden Erfindung, ein Verfahren anzugeben, bei der im wesentlichen eine Druckkonstanz über die Wanderschicht längs der Anströmstrecke gegeben ist.

Diese Aufgabe wird dadurch gelöst, daß die Dicke der Wanderschicht in Querströmungsrichtung der Abgase gesehen von oben nach unten abnimmt derart, daß der Druckverlust über die Wanderschicht längs der Anströmstrecke im wesentlichen konstant ist.

Die Erfindung richtet sich auch auf eine Vorrichtung zur Durchführung des Verfahrens mit einem Zuströmraum, gasdurchlässigen Wänden zur Begrenzung der Wanderschicht, einem Abströmraum, einer Aufgabeeinrichtung für unbeladenes Adsorptionsmittel am oberen Ende des Reaktors und einer Abzugseinrichtung für beladenes Adsorptionsmittel am unteren Ende des Reaktors.

Bei einer solchen Vorrichtung ist erfindungsgemäß vorgesehen, daß der Abstand der Wände sich von oben nach unten verringert.

Vorzugsweise ist der Abstand der Wände gegensinnig gegeneinander geneigt.

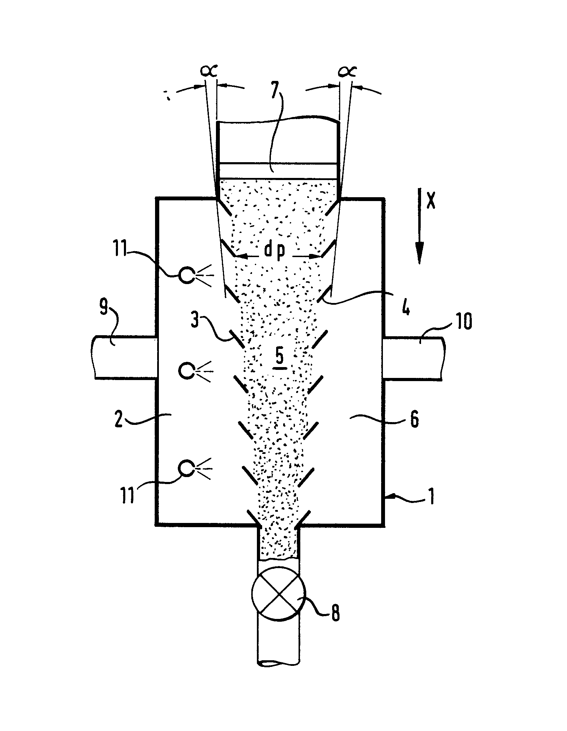

Das erfindungsgemäße Verfahren und die erfindungsgemäße Vorrichtung sollen anhand der beigefügten Figur näher erläutert werden.

Der Wanderschichtreaktor 1 weist einen Zuströmraum 2 und zwei gasdurchlässige Wände 3 und 4 zur Begrenzung der Wanderschicht aus einem körnigen, kohlenstoffhaltigen Adsorptionsmittel 5 und einen Abströmraum 6 auf. Weiterhin sind am oberen Ende des Reaktors eine Aufgabeeinrichtung 7 für unbeladenes Adsorptionsmittel und am unteren Ende des Reaktors eine Abzugseinrichtung 8 für beladenes Adsorptionsmittel vorgesehen. Der Zuströmraum ist mit einer Abgaszuführungsleitung 9 verbunden, während die gereinigten Abgase über eine mit dem Abströmraum 6 verbundene Leitung 10 abgeführt werden.

Die Wände 3 und 4 sind in an sich bekannter Weise durch Jalousien aufgebaut, die ein gerichtetes Einströmen und Abströmen der Gase in die Wanderschicht 5 ermöglichen. Da die Wände 3 und 4 unter einem Winkel Alpha bezüglich der Wanderrichtung der Wanderschicht geneigt sind, verändert sich die Schichtdicke in Querströmungsrichtung von oben nach unten, d. h. in der in der Figur mit x gekennzeichneten Richtung derart, daß der Druckverlust dp(x) gleich konstant ist.

Falls es für das Reinigungsverfahren erforderlich ist, können in dem Zuströmraum eine oder mehrere Düsen 11 für die Zugabe von Ammoniak in das zu reinigende Abgas vorgesehen sein.

## Ansprüche

1. Verfahren zur Entfernung von Schadgasen aus Abgasen, insbesondere Rauchgasen einer Feuerung, bei dem die Abgase ggf. unter Zugabe von Ammoniak quer durch eine innerhalb eines Reaktors von oben nach unten wandernden Schicht aus körnigem, kohlenstoffhaltigen Adsorptionsmittel geführt werden, dadurch gekennzeichnet,

daß die Dicke der Wanderschicht in Querströmungsrichtung der Abgase gesehen von oben nach unten abnimmt derart, daß der Druckverlust über die Wanderschicht längs der Anströmstrecke konstant ist.

2. Vorrichtung zur Durchführung des Verfahrens mit einem Zuströmraum, gasdurchlässigen Wänden zur Begrenzung der Wanderschicht, einem Abströmraum, einer Aufgabeeinrichtung für unbeladenes Adsorptionsmittel an dem oberen Ende des Reaktors und einer Abzugseinrichtung für beladenes Adsorptionsmittel am unteren Ende des Reaktors, dadurch gekennzeichnet,

daß der Abstand der Wände (3,4) sich von oben nach unten derart verringert, daß der Druckverlust - (dp(x)) über die Wanderschicht (5) längs der Anströmstrecke konstant ist.

3. Vorrichtung zur Durchführung des Verfahrens nach Anspruch 2, dadurch gekennzeichnet,

daß die Wände gegensinnig gegeneinander geneigt sind.

4. Vorrichtung zur Durchführung des Verfahrens nach Anspruch 2 oder 3, dadurch gekennzeichnet,

daß die gasduchlässigen Wände (3 und 4) durch Jalousien aufgebaut sind.